Europäisches Patentamt

European Patent Office

Office européen des brevets

(19)

(11) Numéro de publication : **0 311 472 B1**

(12) # FASCICULE DE BREVET EUROPEEN

(45) Date de publication du fascicule du brevet :
**12.08.92 Bulletin 92/33**

(51) Int. Cl.$^5$ : **H02B 13/02**

(21) Numéro de dépôt : **88402306.0**

(22) Date de dépôt : **14.09.88**

(54) **Tableau moyenne tension préfabriqué à interrupteur rotatif.**

(30) Priorité : **06.10.87 FR 8713883**

(43) Date de publication de la demande :
**12.04.89 Bulletin 89/15**

(45) Mention de la délivrance du brevet :
**12.08.92 Bulletin 92/33**

(84) Etats contractants désignés :
**BE CH DE ES GB IT LI SE**

(56) Documents cités :
**FR-A- 2 305 871**
**TECHNIQUES CEM. no. 105, mai 1979, page 25
- 33; S.CAGNIOUX: "le "kit 27" synthèse de
deux techniques"**

(73) Titulaire : **MERLIN GERIN
Rue Henri Tarze
F-38050 Grenoble Cédex (FR)**

(72) Inventeur : **Riva, Gérard
Merlin Gerin§Sce. Brevets
F-38050 Grenoble Cédex (FR)**
Inventeur : **Gaillard, Jacques
Merlin Gerin Sce. Brevets
F-38050 Grenoble Cédex (FR)**
Inventeur : **Colleoni, Guido
Merlin Gerin Sce. Brevets
F-38050 Grenoble Cédex (FR)**
Inventeur : **Quenin, Jacques
Merlin Gerin Sce. Brevets
F-38050 Grenoble Cédex (FR)**

(74) Mandataire : **Kern, Paul et al
Merlin Gerin Sce. Brevets 20, rue Henri Tarze
F-38050 Grenoble Cédex (FR)**

EP 0 311 472 B1

**Description**

L'invention est relative à un tableau moyenne tension préfabriqué, constitué par une pluralité de cellules alignées à encombrement réduit et à isolement dans l'air, dotées d'un équipement standard, comprenant un interrupteur ou sectionneur à enceinte étanche remplie d'un gaz à rigidité diélectrique élevée, chaque cellule étant personnalisée par l'adjonction d'un équipement additionnel moyenne tension, et les différentes cellules étant raccordées par un jeu de barres disposé horizontalement dans un compartiment supérieur de chaque cellule, les barres étant échelonnées en profondeur suivant une direction perpendiculaire à la face avant de la cellule.

Les tableaux préfabriqués du genre mentionné, notamment pour des postes de transformation moyenne tension, basse tension, sont constitués par un assemblage de cellules à parois métalliques dont chacune assure une fonction électrique déterminée. La constitution des tableaux varie en fonction du mode d'alimentation, du type de poste et des modes de comptage. La conception modulaire assure une grande souplesse, et la préfabrication permet une fabrication en série en usine par des spécialistes, le montage du tableau se résumant à un assemblage des cellules effectué sur place par une main d'oeuvre non spécialisée. Le document TECHNIQUES CEM n°105, Mai 79 décrit un tableau alliant la coupure dans l'hexafluorure de soufre et l'isolation dans l'air, ce qui contribue à une réduction de l'encombrement des cellules. L'interrupteur du type à contacts mobiles coulissants est logé dans une enceinte étanche de faible profondeur, l'écartement entre les contacts des différentes phases étant inférieur à celui entre les barres ou les câbles associés. Toutes les cellules du tableau ont une dimension standard, adaptée à l'équipement maximal susceptible d'être logé dans une cellule. Les cellules ne recevant que l'équipement standard sont surdimensionnées, notamment en hauteur et l'espace disponible n'est pas utilisé au maximum. Il est bien entendu inconcevable d'avoir dans un même tableau des cellules de hauteur différente, l'espace libéré étant d'ailleurs pratiquement inutilisable.

La présente invention a pour but de permettre la réalisation d'un tableau ayant des cellules de profondeur et de hauteur standard, la largeur étant adaptée à l'équipement logé dans la cellule, de façon à utiliser au mieux l'espace disponible.

Le tableau selon la présente invention est caractérisé en ce que l'équipement standard de la cellule comporte un interrupteur ou sectionneur rotatif, dont l'axe de rotation s'étend perpendiculairement à la face avant de la cellule dans la direction de la profondeur de la cellule et porte trois couteaux rotatifs échelonnés le long de l'axe, chaque couteau correspondant à l'une des phases du tableau, et coopérant avec des contacts fixes agencés en traversées supérieures et inférieures de l'enceinte dont la traversée supérieure est raccordée à la barre correspondante à isolement dans l'air, et que l'ensemble des équipements d'une même phase est disposé dans une tranche verticale ayant un plan polaire vertical de symétrie contenant la barre de cette phase, l'écartement entre les plans polaires étant déterminé par l'équipement additionnel du tableau de plus grand encombrement en profondeur pour disposer d'une profondeur identique de l'ensemble des cellules du tableau, la largeur des cellules étant adaptée à l'équipement additionnel moyenne tension particulier de chaque cellule.

Le volume intérieur de chaque cellule est virtuellement subdivisé en trois tranches verticales échelonnées en profondeur de la cellule, la hauteur et la largeur de chacune des tranches correspondant à la hauteur et à la largeur de la cellule. Chaque contact mobile de l'interrupteur rotatif se débat dans le plan polaire de l'une des tranches verticales, la barre associée étant contenue dans ce plan polaire. Les trois barres du jeu de barres sont avantageusement directement portées par les traversées correspondantes de l'interrupteur rotatif dont l'écartement correspond à celui des barres. Cet écartement est généralement déterminé par l'encombrement des blocs de mesure et de comptage du tableau, lequel écartement est supérieur aux distances d'isolement des barres. L'équipement additionnel en moyenne tension de chaque cellule est logé dans la partie inférieure sous l'interrupteur rotatif, en respectant la disposition dans chaque tranche polaire verticale. Certains équipements sont juxtaposés dans le sens de la largeur de la tranche verticale, ce qui peut nécessiter une augmentation de la largeur de la cellule. La cellule de largeur minimale est la cellule interrupteur arrivée, qui ne comporte que l'interrupteur rotatif, le tronçon de jeu de barres et le raccordement des câbles. C'est l'interrupteur rotatif qui présente la plus grande largeur et qui dans ce cas, détermine la largeur de la cellule. Une cellule arrivée et protection générale, qui comporte l'équipement standard constitué par le tronçon de jeu de barres et l'interrupteur rotatif, et un équipement additionnel constitué par les fusibles, les dispositifs de raccordement au câble et les blocs de comptage, aura par contre une largeur supérieure imposée par la nécessité de disposer des blocs de comptage à côté des fusibles. Il en est de même pour les cellules disjoncteurs et les cellules de couplage de jeu de barres dont l'encombrement en largeur doit être augmenté. Avec quelques largeurs de cellules, il est possible de réaliser la majorité des schémas de postes et il est clair que ces cellules de largeur différente peuvent être réalisées à partir d'éléments standard, en l'occurrence d'ossatures et de tôles associées pour constituer les différentes cellules. Les ossatures peuvent être du type modulaire rendant compatible les différentes largeurs de cellules sans grande modification.

Toutes les cellules du tableau selon l'invention ont la même hauteur et la même profondeur et seule la largeur de celles-ci, et de ce fait la largeur du tableau, varient selon le schéma de l'installation. Une extension du tableau est particulièrement simple puisqu'il suffit d'adjoindre des cellules standard, seule la largeur du tableau étant augmentée. L'esthétique est parfaitement conservée tout en utilisant l'espace disponible au maximum.

D'autres avantages et caractéristiques ressortiront plus clairement de la description qui va suivre d'un mode de mise en oeuvre de l'invention donné à titre d'exemple non limitatif et représenté aux dessins annexés dans lesquels:

    – la figure 1 est une vue schématique en perspective d'un poste selon l'invention, les faces avant et supérieures étant supposées enlevées;

    – les figures 2 et 3 sont respectivement des vues de côté et en élévation d'une cellule arrivée selon la figure 1;

    – les figures 4 et 5 sont des vues analogues à celles des figures 2 et 3 montrant une cellule de protection générale à fusibles;

    – les figures 6 et 7 sont des vues analogues aux figures 2 et 3 montrant une cellule de protection générale à éléments de comptage;

    – les figures 8 et 9 sont des vues analogues à celle de la figure 3, montrant des cellules disjoncteur équipées respectivement d'un et de deux blocs de comptage;

    – la figure 10 est une vue analogue à celle de la figure 3 montrant une cellule de raccordement de jeu de barres.

Sur les figures, un tableau désigné par le repère général 10, par exemple pour un poste de transformation moyenne tension, basse tension est alimenté en coupure d'artère ou en double dérivation par deux câbles 12,14 tripolaires et comportent trois cellules juxtaposées, respectivement deux cellules d'arrivée 16,18, et une cellule protection générale 20 à disjoncteur et bloc de comptage. Les cellules arrivée 16,18 sont absolument identiques, l'une étant raccordée au câble 12 et l'autre au câble 14, tandis que la cellule disjoncteur 20 comporte un équipement standard identique à celui des cellules arrivée 16,18 et un équipement additionnel constitué par le disjoncteur et le bloc de comptage.

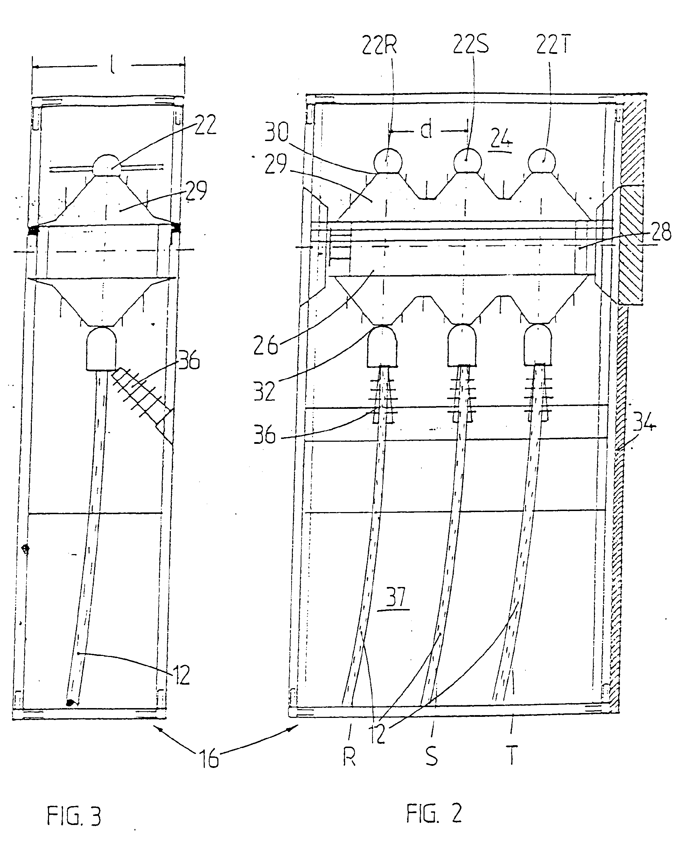

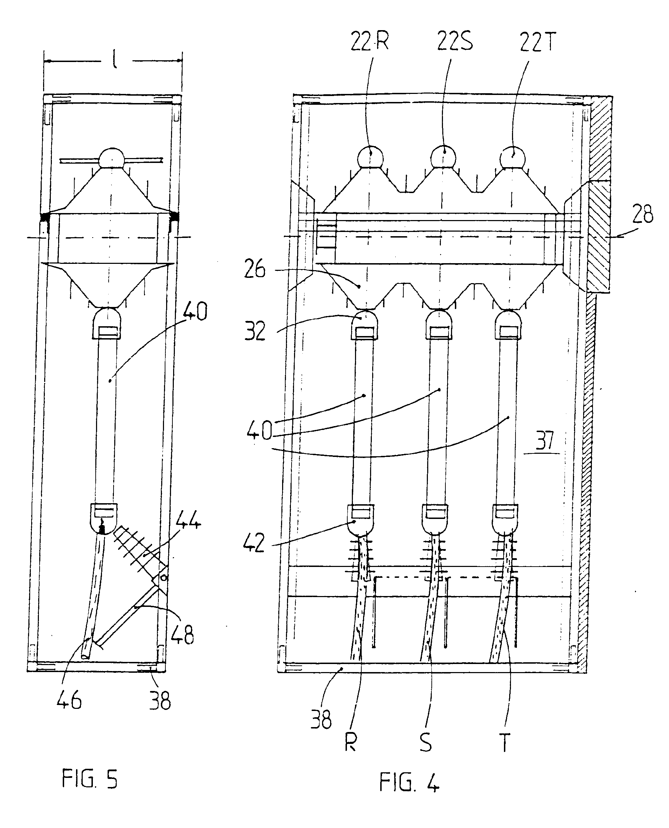

En se référant plus particulièrement aux figures 2 et 3, on voit que les cellules arrivée 16,18, comportent l'équipement standard constitué par un tronçon de jeu de barres 22R,22S,22T logé dans un compartiment 24 supérieur de la cellule, et un interrupteur rotatif 26 à trois couteaux mobiles portés par un axe de commande 28. L'interrupteur rotatif 26 comporte une enceinte étanche 29 remplie d'hexafluorure de soufre, portant à sa partie supérieure trois traversées 30 de support des barres 22R,S,T et à la partie inférieure trois traversées 32 de raccordement des extrémités du câble 12. Un interrupteur de ce type est décrit dans la demande de brevet européen No. 88401386.3 du 08.06.88, à laquelle on se reportera avantageusement pour de plus amples détails. L'axe 28 de l'interrupteur rotatif s'étend perpendiculairement à la face avant 34 de la cellule et l'enveloppe 29 occupe toute la largeur (1) de la cellule 16. L'enveloppe 29, qui peut être isolante constitue une cloison de séparation du compartiment jeu de barres 24 et d'un compartiment inférieur 37 dans lequel se déploient les extrémités du câble 12. La cellule 16 en forme d'armoire parallélépipédique d'un type standard comporte une ossature supportant des panneaux métalliques constituant les parois de la cellule. Des isolateurs 36 supportent les extrémités du câble 12 raccordées aux traversées 32. Tous les éléments associés à l'une des phases s'étendent dans un plan polaire R,S,T vertical, la cellule 16 étant virtuellement subdivisée en trois tranches verticales parallèles à la face avant 34, chacune associée à l'une des phases. L'écartement (d) entre les plans polaires R,S,T correspond à l'écartement entre les barres 22R,S,T et à celui des contacts mobiles de l'interrupteur rotatif 26. Le compartiment jeu de barres 24 et le compartiment inférieur 37 sont à isolement dans l'air et le compartiment jeu de barres 24 est raccordé au compartiment conjugué de la cellule adjacente 18 pour constituer le jeu de barres du tableau 10. Les trois barres 22R,22S,22T s'étendent dans un plan horizontal parallèlement à la face avant 34 du tableau en étant échelonnées en profondeur dans les trois plans R,S,T. La commande de l'interrupteur rotatif 26 est effectuée sur la face avant 34 du tableau par tout mécanisme approprié pour ouvrir ou fermer l'interrupteur et isoler ou raccorder le jeu de barres 22R,S,T au câble 12. Le tableau 10 peut comporter un nombre quelconque de cellules arrivée 16,18 ou de cellules départ, lesquelles sont identiques aux cellules arrivée 16,18.

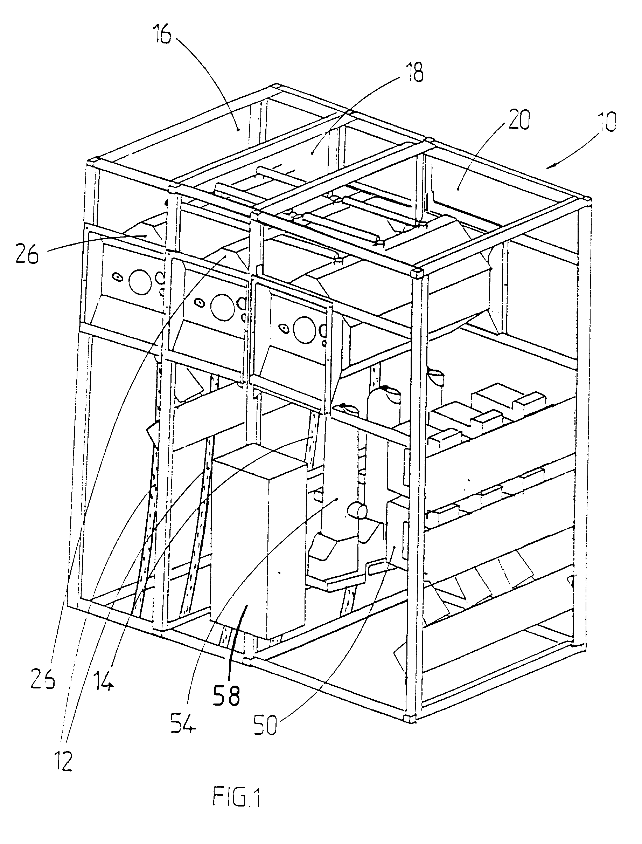

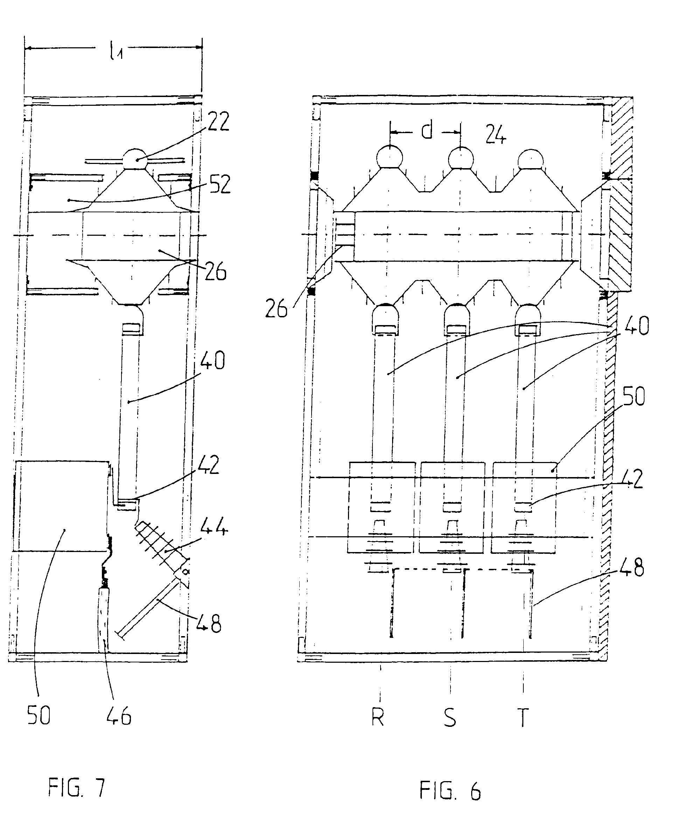

Le tableau comporte, en plus des cellules arrivée, des cellules dont certaines sont décrites ci-dessous en référence aux figures 4 - 10 dans lesquelles les mêmes numéros de référence sont utilisés pour désigner des éléments analogues ou identiques à ceux représentés aux figures 1 à 3. Les figures 4 et 5 montrent des cellules 38 de protection générale à fusibles 40, raccordés aux traversées inférieures 32 de l'interrupteur rotatif 26. Les trois fusibles 40 s'étendent verticalement sous les traversées 32 dans les plans R,S,T, leur extrémité inférieure 42 étant maintenue par un isolateur support 44. Ces extrémités inférieures 42 sont raccordées à un câble 46 et sont susceptibles de coopérer avec les couteaux 48 d'un sectionneur de mise à la terre associé aux isolateurs 44. Le volume du compartiment inférieur 37 est suffisant pour le logement des fusibles 40 et les dimensions de la cellule, notamment sa largeur (l), sont identiques à ceux des cellules d'arrivée 16,18.

Les figures 6 et 7 illustrent une cellule départ de protection générale à fusibles, analogue à celle représentée aux figures 4 et 5, mais équipée de trois blocs de mesure et de comptage 50, chacun associé à l'une des phases R,S,T. Les blocs de comptage 50 de forme parallélépipèdique contiennent chacun, par exemple un transformateur de courant connecté, d'une part à l'extrémité 42 du fusible associé 40, et d'autre part à l'extrémité du câble 46. Les compartiments de comptage sont disposés au niveau des extrémités 42 des fusibles 40 en étant décalés latéralement par rapport à ces extrémités 42 de la manière représentée à la figure 7. Ce décalage latéral nécessite une augmentation de la largeur (l1) de la cellule qui devient supérieure à la largeur (l) des cellules arrivée 16,18. Une entretoise 52 disposée au niveau de l'interrupteur rotatif 26 compense cette augmentation de largeur, l'interrupteur rotatif 26 étant décalé latéralement par rapport à l'axe de la cellule. On voit sur la figure 6 que les trois blocs de comptage 50 sont pratiquement au contact les uns des autres, et que c'est la profondeur de ces blocs de comptage 50 qui détermine l'écartement (d) entre les plans polaires R,S,T. La cellule à blocs de comptage 50 est réalisée à partir des mêmes éléments de base, seule sa largeur (l1) étant augmentée.

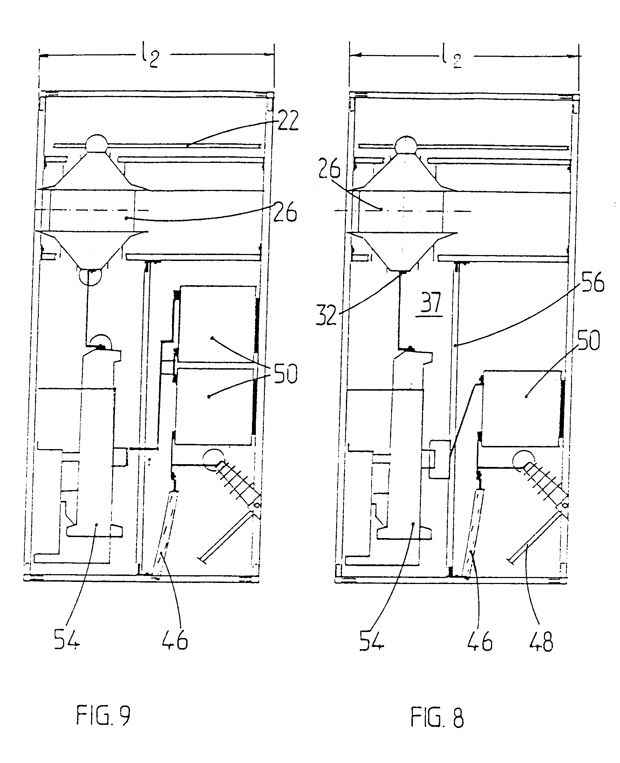

La figure 8 montre une cellule disjoncteur ayant trois pôles 54 logés dans le compartiment inférieur 37. Chaque pôle 54 est raccordé d'une part, à une traversée inférieure 32 de l'interrupteur rotatif 26 en s'étendant dans l'un des plans polaires R,S,T, et à un bloc de comptage 50 juxtaposé latéralement au pôle 54. Cette juxtaposition latérale du disjoncteur 54 et des blocs de comptage 50 nécessite une largeur accrue (l2) de la cellule qui peut comporter un cloisonnement additionnel 56 entre le disjoncteur 54 et les blocs de comptage 50 raccordés au câble 46. A l'extrémité du câble 46 peut être associé un sectionneur de mise à la terre 48 du type représenté aux figures 6 et 7. L'encombrement en profondeur des pôles 54 est inférieur à celui des blocs de comptage 50, lesquels déterminent l'écartement (d) entre les plans polaires R,S,T qui reste le même.

La figure 9 montre une cellule disjoncteur ayant deux blocs de comptage et de mesure 50 connectés en série d'une manière analogue à celle représentée à la figure 8. Le deuxième bloc de comptage 50 peut être logé dans l'emplacement disponible à côté du disjoncteur 54 et une cellule de même encombrement peut être utilisée.

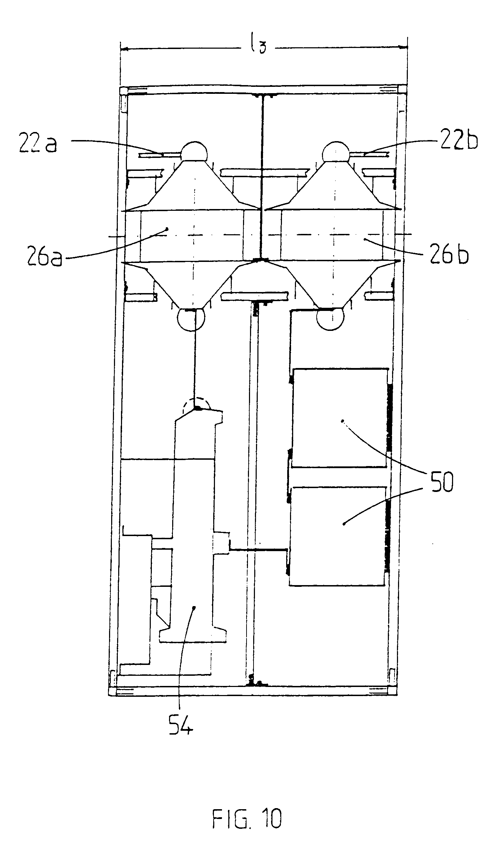

La figure 10 représente une cellule sectionnement de barres, qui permet de relier deux tronçons 22a, 22b de jeux de barres entre eux. A chaque tronçon 22a, 22b est associé un dispositif de sectionnement constitué par un interrupteur rotatif 26a, 26b, les deux interrupteurs ou sectionneurs étant juxtaposés

dans la largeur (l3) de la cellule. A l'interrupteur rotatif 26a est associé un disjoncteur 54, disposé de la manière décrite en référence aux figures 8 et 9 et raccordé à des blocs de mesure et de comptage 50 juxtaposés latéralement à ce disjoncteur 54. La disposition selon l'invention dans les plans polaires R,S,T est conservée, seule la largeur de la cellule étant adaptée à l'encombrement des équipements additionnels. D'autres architectures et combinaisons sont bien entendu possibles et toutes les cellules décrites ci-dessus peuvent être incorporées dans un tableau sans augmentation du gabarit de celui-ci et en conservant la facilité de montage et de raccordement des tronçons de jeu de barres.

La disposition ordonnée selon l'invention, facilite la conception et l'extension d'un tableau. En déterminant l'écartement (d) des trois pôles de l'interrupteur 26 et du jeu de barres associé 22R,22S,22T en fonction de l'encombrement de l'équipement spécial le plus important, on respecte la disposition dans les plans polaires R,S,T ou plus exactement dans les tranches verticales ayant pour plan de symétrie les plans polaires R,S,T.

Un compartiment basse tension est disposé sur la face avant du tableau au-dessus ou au-dessous de la commande de l'interrupteur rotatif. Ce compartiment reçoit de l'équipement additionnel basse tension du tableau, qui est avantageusement un système modulaire supporté par un rail profilé symétrique.

## Revendications

1. Tableau moyenne tension préfabriqué, constitué par une pluralité de cellules (16,18,20) alignées à encombrement réduit et à isolement dans l'air, dotées d'un équipement standard, comprenant un interrupteur ou sectionneur (26) à enceinte (29) étanche remplie d'un gaz à rigidité diélectrique élevée, chaque cellule étant personnalisée par l'adjonction d'un équipement additionnel moyenne tension, et les différentes cellules étant raccordées par un jeu de barres (22) disposé horizontalement dans un compartiment supérieur (24) de chaque cellule, les barres (22R,S,T) étant échelonnées en profondeur suivant une direction perpendiculaire à la face avant (34) de la cellule, caractérisé en ce que l'équipement standard de la cellule comporte un interrupteur ou sectionneur rotatif (26), dont l'axe (28) de rotation s'étend perpendiculairement à la face avant (34) de la cellule dans la direction de la profondeur de la cellule et porte trois couteaux rotatifs échelonnés le long de l'axe (28), chaque couteau correspondant à l'une des phases du tableau, et coopérant avec des contacts fixes agencés en traversées supérieures (30) et inférieures (32) de l'enceinte (29) dont la traversée supérieure (30) est raccordée à la barre (22) correspondante à isolement dans l'air et que l'ensemble des équipements d'une même phase est disposé dans une tranche verticale ayant un plan polaire (R,S,T) vertical de symétrie contenant la barre (22 R,S,T) de cette phase, l'écartement (d) entre les plans polaires (R,S,T) étant déterminé par l'équipement additionnel (40,50,54) du tableau de plus grand encombrement en profondeur pour disposer d'une profondeur identique de l'ensemble des cellules du tableau, la largeur (l) des cellules étant adaptée à l'équipement additionnel moyenne tension (40,50,54) particulier de chaque cellule.

2. Tableau selon la revendication 1, caractérisé en ce que la hauteur de toutes les cellules du tableau est la même.

3. Tableau selon la revendication 1 ou 2, caractérisé en ce que l'interrupteur ou le sectionneur rotatif (26) est interposé entre le compartiment (24) jeu de barres et un compartiment inférieur (37) de la cellule et que ledit équipement additionnel moyenne tension (40,50,54) est logé dans le compartiment inférieur.

4. Tableau selon la revendication 3, caractérisé en ce que l'équipement additionnel moyenne tension comporte des fusibles (40) disposés verticalement sous les traversées inférieures (32) de l'interrupteur rotatif (26) auxquelles ils sont connectés.

5. Tableau selon la revendication 3 ou 4, caractérisé en ce que l'équipement additionnel moyenne tension comporte des blocs de mesure et/ou de comptage (50) disposés latéralement des fusibles (40) ou des disjoncteurs (54) de protection.

6. Tableau selon l'une quelconque des revendications précédentes, caractérisé en ce que la commande de l'interrupteur ou du sectionneur rotatif est disposée sur la face avant (34) de la cellule.

7. Tableau selon l'une quelconque des revendications précédentes, caractérisé en ce qu'une cloison (52), à laquelle appartient l'enceinte (29) de l'interrupteur rotatif, sépare la partie supérieure (24) de la cellule contenant le jeu de barres (22) de la partie inférieure (37) recevant les équipements additionnels.

8. Tableau selon l'une quelconque des revendications précédentes, caractérisé en ce qu'un compartiment (58), dit compartiment basse tension, recoive de l'équipement additionnel basse tension en face avant au-dessus de la commande de l'interrupteur ou du sectionneur rotatif.

9. Tableau selon la revendication 8, caractérisé en ce que l'équipement basse tension et le compartiment basse tension soient conformes au système d'installation modulaire sur rail profilé symétrique.

**Patentansprüche**

1. Fabrikfertige Mittelspannungsanlage aus mehreren aneinandergereihten luftisolierten Schaltzellen (16, 18, 20) in Kompaktbauweise mit Standardausrüstung aus einem Trenn- oder Lasttrennschalter (26) in dichtgekapseltem und mit einem Gas hoher dielektrischer Festigkeit gefüllten Gehäuse (29), wobei jede Schaltzelle mit zusätzlichen Mittelspannungsausrüstungen individuell bestückt ist und die einzelnen Schaltzellen durch Sammelschienen (22) verbunden sind, die waagerecht in einem oberen Schaltzellenabteil (24) so angeordnet sind, daß die einzelnen Schienenstränge (22 R, S, T) in der Tiefenebene senkrecht zur Schaltzellenfrontseite (34) gesehen versetzt sind, dadurch gekennzeichnet, daß die Standardausrüstung der Schaltzelle einen Trenndrehschalter oder Lasttrenndrehschalter (26) umfaßt, dessen drehbare Schaltwelle (28) in der Tiefenebene der Schaltzelle, senkrecht zu deren Frontseite (34) verläuft und mit drei entlang der Schaltwelle (28) versetzt angeordneten drehbaren Kontaktmessern bestückt ist, die jeweils einer Phase der Schaltanlage zugeordnet sind und mit drei als oberen bzw. unteren Durchführungen (30, 32) des Gehäuses (29) ausgebildetenangeordneten feststehenden Kontakten zusammenwirken, wobei die obere Durchführung (30) mit der zugehörigen luftisolierten Sammelschiene (22) verbunden ist und die gesamten Ausrüstungen einer Phase in einemdie jeweilige Sammelschiene (22 R, S, T) enthaltenden senkrechten Schnitt mit einer Pol-Symmetrieebene (R, S, T) angeordnet sind, wobei der Abstand (d) zwischen den Pol-Symmetrieebenen (R, S, T) von der jeweiligen Zusatzausrüstung (40, 50, 54) der Schaltzelle mit der größten Tiefe abhängt, um eine einheitliche Bautiefe für alle Schaltzellen zu gewährleisten, und wobei die Breite (l) der einzelnen Schaltzellen an die jeweilige Mittelspannungs-Zusatzausrüstung (40, 50, 54) angepaßt ist.

2. Schaltanlage nach Anspruch 1, dadurch gekennzeichnet, daß die Höhe sämtlicher Schaltzellen der Schaltanlage identisch ist.

3. Schaltanlage nach Anspruch 1 oder 2, dadurch gekennzeichnet, daß der Trenndrehschalter oder Lasttrenndrehschalter (26) zwischen dem Sammelschienenraum (24) und einem unteren Abteil (37) der Schaltzelle angeordnet ist, und daß die genannte Mittelspannungs-Zusatzausrüstung (40, 50, 54) im unteren Abteil installiert ist.

4. Schaltanlage nach Anspruch 3, dadurch gekennzeichnet, daß die Mittelspannungs-Zusatzausrüstung Sicherungen (40) aufweist, die senkrecht unterhalb der unteren Durchführungen (32) des Trenndrehschalters angeordnet und mit diesen verbunden sind.

5. Schaltanlage nach Anspruch 3 oder 4, dadurch gekennzeichnet, daß die Mittelspannungs-Zusatzausrüstung Meß- und/oder Zähleinheiten (50) umfaßt, die seitlich neben den Sicherungen (40) bzw. Leistungsschaltern (54) angeordnet sind.

6. Schaltanlage nach einem der vorhergehenden Ansprüche, dadurch gekennzeichnet, daß der Antrieb des Trenndrehschalters oder Lasttrenndrehschalters an der Frontseite (34) der Schaltzelle angebracht ist.

7. Schaltanlage nach einem der vorhergehenden Ansprüche, dadurch gekennzeichnet, daß sich zwischen dem oberen Schaltzellenabteil (24) mit dem Sammelschienen (22) und dem unteren Abteil (37) mit den Zusatzausrüstungen eine Trennwand (52) befindet, zu der auch das Gehäuse (29) des Trenndrehschalters gehört.

8. Schaltanlage nach einem der vorhergehenden Ansprüche, dadurch gekennzeichnet, daß ein sogenanntes Niederspannungs-Abteil (58) zur Aufnahme von Niederspannungs-Zusatzausrüstungen an der Frontseite der Schaltzelle oberhalb des Antriebs für den Trenndrehschalter oder Lasttrenndrehschalter angeordnet ist.

9. Schaltanlage nach Anspruch 8, dadurch gekennzeichnet, daß Niederspannungs-Zusatzausrüstung und -Abteil dem modularen Installationssystem mit symmetrischen Profilschienen entsprechen.

**Claims**

1. A prefabricated medium voltage switchboard, made up of a plurality of aligned air-insulated cubicles (16, 18, 20) of small dimensions, fitted with standard equipment, comprising a switch or disconnector (26) with a sealed enclosure (29) filled with a high dielectric strength gas, each cubicle being customized by the addition of additional medium voltage equipment, and the different cubicles being connected by a busbar (22) disposed horizontally in an upper compartment (24) of each cubicle, the bars (22R, S, T) being staggered depthwise in a direction perpendicular to the front panel (34) of the cubicle, characterized in that the standard equipment of the cubicle comprises a rotary switch or disconnector (26), whose rotation axis (28) extends perpendicularly to the front panel (34) of the cubicle in the depthwise direction of the cubicle and supports three rotary knife-blades located at intervals along the axis (28), each knife-blade corresponding to one of the phases of the switchboard, and cooperating with stationary contacts arranged as upper (30) and lower (32) bushings of the enclosure (29) whose upper bushing (30) is connected to the corresponding air-insulated bar (22) and that all the equipment of any one phase is disposed in a vertical section having a vertical polar plane (R, S, T) in symmetry containing the bar (22R, S, T) of this phase, the distance (d) between the polar planes (R, S, T) being determined by the additional equipment (40, 50, 54) of the switchboard having the largest depthwise dimension so that all the cubicles of the switchboard are identical in depth, the width (l) of the cubicles being adapted to the particular additional medium voltage equipment (40, 50, 54) of each cubicle.

2. The switchboard according to claim 1, characterized in that the height of all the switchboard cubicles is the same.

3. The switchboard according to claim 1 or 2, characterized in that the rotary switch or disconnector (26) is fitted between the busbar compartment (24) and a bottom compartment (37) of the cubicle and that said additional medium voltage equipment (40, 50, 54) is housed in the bottom compartment.

4. The switchboard according to claim 3, characterized in that the additional medium voltage equipment comprises fuses (40) arranged vertically underneath the lower bushings (32) of the rotary switch (26) to which they are connected.

5. The switchboard according to claim 3 or 4, characterized in that the additional medium voltage equipment comprises measuring and/or metering units (50) disposed laterally from the fuses (40) or protective circuit breakers (54).

6. The switchboard according to any one of the foregoing claims, characterized in that the rotary switch or disconnector operating control is located on the front panel (34) of the cubicle.

7. The switchboard according to any one of the foregoing claims, characterized in that a partition (52), to which the rotary switch enclosure (29) belongs, separates the upper part (24) of the cubicle containing the busbar (22) from the lower part (37) housing the additional equipment.

8. The switchboard according to any one of the foregoing claims, characterized in that a compartment (58), called low voltage compartment, houses additional low voltage equipment on the front panel above the rotary switch or disconnector operating control.

9. The switchboard according to claim 8, characterized in that the low voltage equipment and the low voltage compartment are congruent with the modular installation system on a symmetrical profiled rail.

FIG.1

FIG. 3

FIG. 2

FIG. 5

FIG. 4

FIG. 7

FIG. 6

FIG. 9

FIG. 8

FIG. 10